# EUROPEAN PATENT APPLICATION

(11) **EP 4 583 124 A1**
(43) Date of publication of application: **09.07.2025**
(21) Application number: 24150689.8
(22) Date of filing: 08.01.2024
(51) Int. Cl.: H01B 3/56, H02B 13/055

(54) **A HALOGEN-FREE DIELECTRIC GAS FOR USE IN HIGH-VOLTAGE APPLICATIONS**

(71) Applicant: Comet AG, 3175 Flamatt (CH); Smiths Detection-Watford Limited, Hemel Hempstead HP2 7DE (GB)
(72) Inventor: ZENNER, Johannes, 1784 Courtepin (CH)
(74) Representative: Eichelhardt, Frank Robert

(57) **Abstract**

A halogen-free, in particular fluorine-free, dielectric gas (10) for use in high-voltage applications, in particular for preventing electric discharges, is proposed, the dielectric gas comprising: a first mass fraction (w₁) of nitrogen gas (N₂); and a second mass fraction (w₂) of oxygen gas (O₂), the first mass fraction (wi) being below 80 wt%.

## Description

### Prior art

The invention concerns a halogen-free, in particular fluorine-free, dielectric gas for use in high-voltage applications, in particular for preventing electric discharges.

Sulfur hexafluoride (SF₆) is still widely used in the industry as dielectric gas for high voltage applications due to its unmatched performance in preventing and quenching electric discharges. SF₆ has a very strong global warming potential, thus substitutions are investigated comprising a gas mixture that typically contains a smaller wt% gas component of a halogen, in particular fluorine, carrying molecule, and a larger wt% of buffer gas, usually air constituents, in particular nitrogen gas (N₂) or carbon dioxide (CO₂) gas.

An objective of the invention is to make an improved dielectric gas available, in particular with respect to dielectric strength and/or environmental safety. According to the invention, the objective is achieved by the features of claim 1, while advantageous embodiments and further developments of the invention can be taken from the dependent claims.

### Advantages of the invention

A halogen-free, in particular fluorine-free, dielectric gas for use in high-voltage applications, in particular for preventing electric discharges, is proposed, the dielectric gas comprising: a first mass fraction of nitrogen gas (N₂); and a second mass fraction of oxygen gas (O₂), the first mass fraction being below 80 wt%.

Thereby an improved dielectric gas can be furnished. The constituents of the dielectric gas according to the invention are readily available, easy to handle and environmentally friendly.

The dielectric gas according to the invention features high dielectric strength, i.e. a high break down voltage by using synergetic effects of different gas components to reduce the amount of free electron in the gas, thus preferably preventing avalanche governed Townsend discharges.

Gaseous nitrogen (N₂) is a very stable molecule that provides many rotational and vibrational degrees of freedom, resulting in a high cross section for (inelastic) scattering and decelerating free electrons present within the dielectric gas. It is not easily ionized and has almost no capability for attachment of free electrons.

Oxygen gas (O₂), on the other hand, has high electronegativity and absorbs free electrons quite easily. At the same time, it is easily ionized by electron collisions and UV photons, thus providing not only a sink but also a possible source for free electrons.

Experiments by the applicant have shown that gaseous nitrogen (N₂) or gaseous oxygen (O₂) alone will not yield satisfactory results. Only a combination of both gases and possibly additional carbon dioxide gas (CO₂) provides the necessary dielectric properties. In sum, the generation of charge avalanches via accelerated electrons can be advantageously minimized by a combination of those gases.

Furthermore, with the dielectric gas according to the invention an environmental sustainability can be increased, as halogenated gases are harmful to the environment and energy intensive to make. Sulfur hexafluoride (SF₆), for example, is in fact the most potent greenhouse gas and is extremely long-lived in the atmosphere. Although other halogenated gases have weaker greenhouse gas potential, they still pose a serious environmental threat. Gaseous nitrogen (N₂) and oxygen (O₂), on the other hand, are the main constituents of atmospheric air.

The dielectric gas according to the invention may be employed in any conceivable high voltage application, for example in applications for electric power supply and distribution. Preferably, however, the dielectric gas according to the invention is used in X-ray devices for generating X-ray radiation.

By the dielectric gas being "halogen-free" or "fluorine-free" is to be understood that the dielectric gas contains only traces of halogens or fluorine and/or that halogens or fluorine constitute at most 3 wt%, in particular at most 1 wt% and preferably at most 0.1 wt% of the total dielectric gas mixture.

In some embodiments of the invention the first mass fraction and the second mass fraction add up to at least essentially 100 wt%. That is, apart from negligible traces, nitrogen gas (N₂) and oxygen gas (O₂) together constitute the dielectric gas. By a sum of mass fractions of two or more components of the dielectric gas "at least essentially" adding up to 100 wt% is to be understood here and in the following that the dielectric gas contains only traces of further components and/or that the sum of the components constitutes at least 95 wt%, in particular at least 98 wt%, preferably at least 99 wt% and most preferably at least 99.9 wt% of the dielectric gas mixture.

It is further proposed that the dielectric gas comprises a third mass fraction of carbon dioxide gas (CO₂). Although carbon dioxide gas (CO₂) yields a lower cross section for absorbing free electrons than oxygen gas (O₂), its different ionization cross sections with respect to UV and possible stabilization effects of excited molecular states in the dielectric gas helps improving the break down strength compared to binary mixtures of only oxygen gas (O₂) and nitrogen gas (N₂). At the same time, carbon dioxide gas (CO₂) is not a strong oxidizing agent like oxygen gas (O₂), resulting in lower risk of corrosion of metallic components and slower aging of polymers via the production of ozone (O₃).

Possibly, the third mass fraction is higher than the first mass fraction, for example by at least 30 % and preferably by at least 40 %. Thereby generation of electrical discharges can advantageously be minimized.

Moreover, it is proposed that the third mass fraction is higher than 20 wt%, preferably higher than 45 wt% and most preferably higher than 55 wt%. Preferably the gaseous carbon dioxide (CO₂) constitutes a third volume fraction and/or a third partial pressure fraction of the dielectric gas of more than 20 %, in particular of more than 30 % and most preferably of more than 40 %. Thus, free electrons can effectively be captured, and a high chemical stability can be obtained.

Beyond this, it is proposed that the third mass fraction is lower than 65 wt%, in particular lower than 60 wt%. Preferably the gaseous carbon dioxide (CO₂) constitutes a third volume fraction and/or a third partial pressure fraction of the dielectric gas of less than 60 %, in particular of less than 55 % and most preferably of less than 50 %. Thus, effectiveness of electric discharge inhibition can be advantageously maximized. Furthermore, the fraction of the greenhouse gas carbon dioxide (CO₂) can be minimized, in particular for reasons of environmental sustainability.

Advantageously the third volume fraction and/or the third partial pressure fraction of the dielectric gas is 45 %.

Preferably, the first mass fraction, the second mass fraction and the third mass fraction at least essentially add up to 100 wt%. That is, apart from negligible traces, nitrogen gas (N₂), oxygen gas (O₂) and carbon dioxide gas (CO₂) together constitute the dielectric gas. Thus, only readily available gases that are present in atmospheric air and are easy to handle can be employed.

Furthermore, it is proposed that the first mass fraction is higher than the second mass fraction. Preferably the first mass fraction is at least two times, in particular at least 2.5 times, as high as the second mass fraction. In this way the amount of chemically highly active Oxygen (O₂) can be minimized compared to the amount of chemically inert gaseous nitrogen (N₂).

Preferably, the first mass fraction is higher than 25 wt%, in particular higher than 30 wt%. Preferably the gaseous nitrogen (N₂) constitutes a first volume fraction and/or a first partial pressure fraction of the dielectric gas of more than 20 %, in particular of more than 30 % and most preferably of at least 40 %. Thus, a relatively chemically stable dielectric gas can be provided.

Additionally, it is proposed that the first mass fraction is lower than 45 wt%, in particular lower than 40 wt%. Preferably the gaseous nitrogen (N₂) constitutes a first volume fraction and/or a first partial pressure fraction of the dielectric gas of less than 60 %, in particular of less than 55 % and most preferably of at most 50 %. Thus, effectiveness of electric discharge inhibition can be further maximized.

Advantageously the first volume fraction and/or the first partial pressure fraction of the dielectric gas is 40 %, 45 % or 50 %. In an alternative embodiment of the invention, the first volume fraction and/or the first partial pressure fraction of the dielectric gas is 75 %.

Moreover, it is proposed that the second mass fraction is lower than 40 wt%, in particular lower than 30 wt%, preferably lower than 20 wt% and most preferably lower than 15 wt%. Preferably the gaseous oxygen (O₂) constitutes a second volume fraction and/or a second partial pressure fraction of the dielectric gas of less than 30 %, in particular of less than 20 % and most preferably of less than 15 %. In this way the amount of chemically highly active Oxygen (O₂) can be minimized in order to prevent oxidation reactions, in particular to protect component surfaces and to prevent fire and/or explosion hazards.

Advantageously the second volume fraction and/or the second partial pressure fraction of the dielectric gas is 5 %, 10 % or 15 %. In an alternative embodiment of the invention, the second volume fraction and/or the second partial pressure fraction of the dielectric gas is 25 %.

The breakdowns strength of the dielectric gas depends on the number density and thus the pressure of the gas. A compromise must be found between the required break down strength and the technical aspects and costs of a suitable containment for the gas and the required temperature range of operation.

Thus, it is proposed that the dielectric gas has a total pressure of at least 0.6 MPa, in particular of at least 0.7 MPa, preferably of at least 0.8 MPa, and a total pressure of at most 1.5 MPa, preferably at most 1 MPa. Most preferably the total pressure of the dielectric gas is around 1 MPa. Since the breakdown voltage is dependent on the total pressure with the breakdown voltage increasing with higher pressure, the breakdown pressure can advantageously be increased. On the other hand, the total pressure is still low enough to be handled effectively and/or to not damage system components.

Furthermore, an X-ray device subassembly, in particular a HV-generator or a housing for an X-ray device component, for example an X-ray tube, is proposed, the X-ray device subassembly comprising: a pressure vessel; and the aforementioned dielectric gas, the dielectric gas being contained inside the pressure vessel, the pressure vessel in particular further containing at least one high voltage electrical component of an X-ray device. Thereby an X-ray device subassembly can be furnished with improved properties regarding electrical insulation using a dielectric gas with readily available constituents that are easy to handle, too. Furthermore, the environmental sustainability can be increased.

The X-ray device subassembly is preferably a part, in particular a subassembly, of an X-ray device.

The dielectric gas in the pressure vessel is advantageously held at a total pressure of at least 0.6 MPa, preferably at least 0.9 MPa, and a total pressure of at most 1.5 MPa, preferably at most 1.1 MPa. Most preferably the total pressure of the dielectric gas in the pressure vessel is around 1.0 MPa.

Finally, a method for preventing electric discharges in high-voltage applications using the aforementioned dielectric gas is proposed. Thereby an improved method for preventing electric discharge can be obtained with readily available constituents of the dielectric gas that are furthermore easy to handle. Additionally, when using the dielectric gas according to the invention, environmental sustainability can be increased.

### Drawing

Further advantages will become apparent from the following description of the drawing. In the drawing an exemplary embodiment of the invention is illustrated. The drawing, the description and the claims contain a plurality of features in combination. Someone skilled in the art will purposefully also consider the features individually and will find further expedient combinations.

It is shown in:

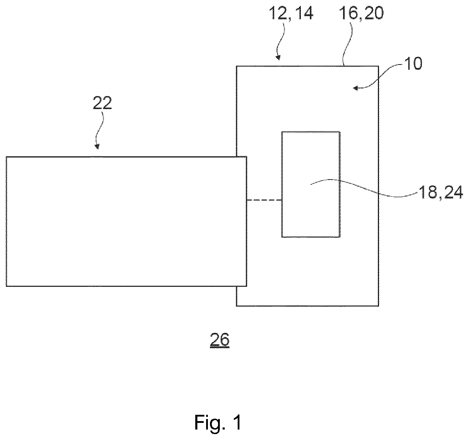

Fig. 1 A schematic illustration of an example of an X-ray device comprising an X-ray device subassembly, the X-ray device subassembly having a pressure vessel and a dielectric gas contained in the pressure vessel.

### Description of the exemplary embodiment

Figure 1 shows a schematic view of an example of an X-ray device 26. The X-ray device 26 is a device for generating X-ray radiation for the testing of materials and/or bonds between different components (not shown). Alternatively, the X-ray device 26 could also be a medical device for the examination of human and/or animal body parts. The following description of the X-ray device 26 is to be understood as merely illustrative. The exact construction of the X-ray device 26 is irrelevant for the invention as such.

The X-ray device 26 has an X-ray device subassembly 12, which is embodied as a HV-generator 14. Furthermore, the X-ray device 26 comprises an X-ray tube 22 which is partly set to high voltage by the HV-generator 14 in order to accelerate electrons onto an anode of the X-ray tube 22 in the known way (not shown).

The HV-generator 14 comprises a housing 16 and an X-ray device component 18 which is embodied as a HV-generator component 24 accommodated in the housing 16. Thus, the housing 16 constitutes a pressure vessel 20 for the HV-generator component 24. In order to electrical insulation the HV-generator component 24 within the pressure vessel 20, the pressure vessel 20 is filled with a dielectric gas 10 according to the invention.

The dielectric gas 10 in the pressure vessel 20 has a total pressure P of 1.0 MPa. The breakdown voltage BDV of the dielectric gas 10 is at least 216 kV. The dielectric gas 10 is halogen-free and in particular fluorine-free and comprises: a first mass fraction w₁ of nitrogen gas (N₂); and a second mass fraction w₂ of oxygen gas (O₂). The dielectric gas 10 may further comprise a third mass fraction w₃ of carbon dioxide gas (CO₂).

The following table 1 shows examples no. 1 to no. 4 of dielectric gases 10 according to the invention, which could be used within the pressure vessel 20. Herein wᵢ designates the mass fraction of the respective component and pᵢ the partial pressure fraction of the component in the gas mixture.

**Table 1: Examples of dielectric gases 10**

| **No.** | **N2** | | **O2** | | **CO₂** | |
|---|---|---|---|---|---|---|
| | **w₁** | **p₁** | **w₂** | **p₂** | **w₃** | **p₃** |
| **1** | 72.43 wt% | 0.75 | 27.58 wt% | 0.25 | 0 | 0 |
| **2** | 39.56 wt% | 0.50 | 4.52 wt% | 0.05 | 55.93 wt% | 0.45 |
| **3** | 35.40 wt% | 0.45 | 8.99 wt% | 0.10 | 55.61 wt% | 0.45 |
| **4** | 31.29 wt% | 0.40 | 13.40 wt% | 0.15 | 55.30 wt% | 0.45 |

All mass fractions w₁, w₂ and w₃ as well as all partial pressure fractions p₁, p₂ and p₃ add up to 100 wt% (taking rounding errors into account). Therefore, the dielectric gas 10 only contains negligible traces of further gases apart from nitrogen (N₂), oxygen (O₂) and possibly carbon dioxide (CO₂). The dielectric gas 10 of the example no. 1 according to table 1 only contains nitrogen gas (N₂) and oxygen gas (O₂) and no carbon dioxide gas (CO₂).

For all examples of the dielectric gas 10 according to table 1, the first mass fraction w₁ is higher than 25 wt% and lower than 80 wt%. For the examples no. 2 to no. 4 the first mass fraction w₁ is even lower than 45 wt%.

For all examples of the dielectric gas 10 according to table 1, the second mass fraction w₂ is lower than 30 wt% and for the examples no. 2 to 4 even lower than 20 wt%.

For the examples no. 2 to no. 4 according to table 1, the third mass fraction w₃ is higher than 45 wt% and lower than 65 wt%. Furthermore, the third mass fraction w₃ is higher than the first mass fraction w₁ for all examples no. 2 to no. 4.

In all examples according to table 1, the first mass fraction w₁ is higher than the second mass fraction w₂, actually the first mass fraction w₁ is at least two times as high as the second mass fraction w₂.

The examples no. 3 and no. 4 according to table 1 provide the best results for the dielectric gas 10.

The X-ray device 26 uses a method for preventing electrical discharges in high-voltage applications using a dielectric gas 10 according to table 1.

### Reference numerals and symbols

- 10: Dielectric gas
- 12: X-ray device subassembly
- 14: HV-generator
- 16: Housing
- 18: X-ray device component
- 20: Pressure vessel
- 22: X-ray tube
- 24: HV-generator component
- 26: X-ray device
- N₂: Nitrogen gas
- O₂: Oxygen gas
- O₃: Ozone
- CO₂: Carbon dioxide gas
- SF₆: Sulfur hexafluoride
- w₁: First mass fraction (of N₂)
- w₂: Second mass fraction (of O₂)
- w₃: Third mass fraction (of CO₂)
- P: Total pressure
- p₁: First partial pressure fraction (of N₂)
- p₂: Second partial pressure fraction (of O₂)
- p₃: Third partial pressure fraction (of CO₂)
- BDV: Breakdown voltage

## Claims

1. A halogen-free, in particular fluorine-free, dielectric gas (10) for use in high-voltage applications, in particular for preventing spark generation, comprising:
- a first mass fraction (w₁) of nitrogen gas (N₂); and
- a second mass fraction (w₂) of oxygen gas (O₂),
the first mass fraction (w₁) being below 80 wt%.

2. The dielectric gas (10) according to claim 1, **characterized by** comprising a third mass fraction (w₃) of carbon dioxide gas (CO₂).

3. The dielectric gas (10) according to claim 2, **characterized in that** the third mass fraction (w₃) is higher than the first mass fraction (w₁).

4. The dielectric gas (10) according to claim 2 or 3, **characterized in that** the third mass fraction (w₃) is higher than 20 wt%, preferably higher than 45 wt%.

5. The dielectric gas (10) according to any one of claims 2 to 4, **characterized in that** the third mass fraction (w₃) is lower than 65 wt%.

6. The dielectric gas (10) according to any one of claims 2 to 3, **characterized in that** first mass fraction (w₁), the second mass fraction (w₂) and the third mass fraction (w₃) at least essentially add up to 100 wt%.

7. The dielectric gas (10) according to any one of the preceding claims, **characterized in that** the first mass fraction (w₁) is higher than the second mass fraction (w₂), preferably the first mass fraction (w₁) is at least two times as high as the second mass fraction (w₂).

8. The dielectric gas (10) according to any one of the preceding claims, **characterized in that** the first mass fraction (w₁) is higher than 25 wt%.

9. The dielectric gas (10) according to any one of the preceding claims, **characterized in that** the first mass fraction (w₁) is lower than 45 wt%.

10. The dielectric gas (10) according to any one of the preceding claims, **characterized in that** the second mass fraction (w₂) is lower than 40 wt%, preferably lower than 30 wt% and particularly preferably lower than 20 wt%.

11. The dielectric gas (10) according to any one of the preceding claims, **characterized by** a total pressure (P) of at least 0.6 MPa and at most 1.5 MPa.

12. An X-ray device subassembly (12), in particular a HV-generator (14) or a housing (16) for an X-ray device component (18), comprising:
- a pressure vessel (20); and
- a dielectric gas (10) according to any one of the preceding claims,
the dielectric gas (10) being contained inside the pressure vessel (20).

13. A method for preventing spark generation in high-voltage applications using a dielectric gas (10) according to any one of claims 1 to 11.
